# EUROPEAN PATENT APPLICATION

(11) **EP 2 615 293 A2**
(43) Veröffentlichungstag der Anmeldung: **17.07.2013**
(21) Anmeldenummer: 11823741.1
(22) Anmeldetag: 02.09.2011
(51) Int. Cl.: F02M 43/04, F02D 19/06, F02M 51/02, F02D 41/04

(54) **VERFAHREN ZUR STEUERUNG EINER DOPPELEINSPRITZUNG UND VORRICHTUNG ZU SEINER ANWENDUNG**

(30) Priorität: 06.09.2010 KR 20100087132
(71) Anmelder: Continental Automotive GmbH, 30165 Hannover (DE)
(72) Erfinder: PARK, Chae Yol, Seoul 131-130 (KR); YANG, Wan Sok, Incheon 407-060 (KR)
(86) Internationale Anmeldenummer: PCT/KR2011/006518
(87) Internationale Veröffentlichungsnummer: WO 2012/033308

(57) **Zusammenfassung**

Die vorliegende Erfindung betrifft ein Verfahren zum Steuern einer Zweifacheinspritzung und eine dies anwendende Vorrichtung. Gemäß der vorliegenden Erfindung ist der Aufbau so gestaltet, dass die Kraftstoffumschaltung von Benzin auf Flüssiggas (LPG) bzw. von Flüssiggas (LPG) auf Benzin automatisch stattfindet und die Umschalteffizienz bei der Kraftstoffumschaltung gesteigert wird. Infolgedessen kann vorliegende Erfindung eine Verschwendung von Kraftstoff und ein Abschalten des Motors verhindern.

## Beschreibung

### Technisches Gebiet

Die vorliegende Erfindung betrifft ein Verfahren zum Steuern einer Zweifacheinspritzung und eine dies anwendende Vorrichtung, genauer: ein Verfahren zum Steuern einer Zweifacheinspritzung und eine dies anwendende Vorrichtung, welche die Kraftstoffumschaltung von Benzin auf Flüssiggas (LPG) bzw. von Flüssiggas (LPG) auf Benzin automatisch ausführt und die Umschalteffizienz bei der Kraftstoffumschaltung steigert.

### Stand der Technik

Als Vorrichtung, welche das unter allen Betriebsbedingungen im Motor benötigte Gemisch in der am leichtesten verbrennbaren Form liefert, ist die Kraftstoffsteuerung eines Fahrzeugs im Allgemeinen ein wichtiger Bestandteil, welcher stark auf die Motorleistung, besonders die Motorkraft und -wirtschaftlichkeit, einwirkt.

Wie zuvor erwähnt ist die Kraftstoffsteuerung bei herkömmlichen Fahrzeugen mit einem Kraftstoffbehälter, einer Kraftstoffpumpe, einem Kraftstofffilter, einer Kraftstoffverteilerleiste, einer Kraftstoffeinspritzdüse, einem Motor, allen Arten von Sensoren, einem Kraftstoffdruckregler und einer elektronischen Steuerungseinheit ausgestattet.

Der Kraftstoffbehälter bewahrt den Kraftstoff auf, die Kraftstoffpumpe saugt den Kraftstoff aus dem Kraftstoffbehälter an und führt ihn zum Vergaser bzw. zur Kraftstoffeinspritzung. Der Kraftstofffilter beseitigt die im Kraftstoff enthaltenen Fremdstoffe. Die Kraftstoffverteilerleiste ist im Ansaugkrümmer montiert, sie unterstützt die Kraftstoffeinspritzdüsen und liefert und verteilt den Kraftstoff mittels der Kraftstoffeinspritzdüsen gleichmäßig.

Die Kraftstoffeinspritzdüsen spritzen entsprechend den von der elektronischen Steuerungseinheit freigegebenen Steuersignalen Kraftstoff in den Ansaugkrümmer eines jeden Zylinders. Der Motor wird durch die Kraftstoffeinspritzdüsen mit Kraftstoff versorgt, geht in Betrieb und treibt das Auto an. Alle Arten von Sensoren erfassen den Zustand der Ansaugluftmasse, der Traglast, des Sauerstoffgehalts der Abgase, der Wassertemperatur, der Ansauglufttemperatur sowie der Geschwindigkeitsab- und -zunahme, nach Umwandlung in elektrische Signale geben die Sensoren den Zustand an die elektronische Steuerungseinheit weiter. Der Kraftstoffdruckregler sendet den verbliebenen Kraftstoff durch das Rücklaufrohr zurück in den Kraftstoffbehälter, indem er den Druck, mit welchem der Kraftstoff an die Kraftstoffeinspritzdüsen gesandt wird, so aufrechthält, dass er stets über dem Druck des Ansaugkrümmers, das heißt bei ungefähr 2,25 kgf/cm², liegt. Nachdem die elektronische Steuerungseinheit anhand der zahlreichen freigegebenen Erfassungssignale eines jeden Sensors den zum Betriebszustand passenden Einspritzzeitpunkt berechnet hat, gibt sie die daraus folgenden Steuerungssignale an die Kraftstoffeinspritzdüsen und setzt die Kraftstoffeinspritzdüsen in Betrieb.

Darüber hinaus werden im Fall von Bi-Fuel-Fahrzeugen, bei denen der Motor durch zwei Arten von Kraftstoff angetrieben wird, bei der Kraftstoffumschaltung von Benzin auf Flüssiggas (LPG) bzw. von Flüssiggas (LPG) auf Benzin bisher entweder zwei Einspritzdüsen gleichzeitig verwendet oder aber ein nach Zylindern getrenntes, sukzessives Kraftstoffumschaltverfahren verwendet. Bisherige Verfahren, bei denen während der Kraftstoffumschaltung gleichzeitig eingespritzt wird, weisen aufgrund einer übermäßigen Zufuhr von Benzin-Flüssiggas(LPG)-Kraftstoff Schwachstellen auf, so kann es vorkommen, dass Kraftstoff verschwendet wird oder sich der Motor ausschaltet.

Ebenso kommen bei Verfahren mit sukzessiver Einspritz-Umschaltung Schwachstellen zum Vorschein: ähnlich wie bei einem "misfire" schaltet sich der Motor ab oder das Fahrzeug wird von Erschütterungen gepackt.

Ein weiterer Nachteil ist auch, dass in dem Fall, dass nicht ausreichend Kraftstoff vorhanden war, oder in Notfallsituationen die Kraftstoffumschaltung nicht automatisch und ohne Aufforderung des Benutzers durchgeführt wird.

Zur Lösung der Probleme, wie sie bei der bisherigen Kraftstoffumschaltung auftreten, sind Maßnahmen erforderlich.

### Detaillierte Beschreibung der Erfindung

### Technische Aufgabe

Die vorliegende Erfindung wurde zur Lösung der o.g. Probleme entworfen, folglich ist es Ziel der vorliegenden Erfindung, ein Steuerungsverfahren zur Zweifacheinspritzung und eine dies anwendende Vorrichtung zu bieten, welche die Kraftstoffumschaltung von Benzin auf Flüssiggas (LPG) bzw. von Flüssiggas (LPG) auf Benzin automatisch ausführt und die Umschalteffizienz der Kraftstoffumschaltung steigert.

### Mittel zur Lösung der Aufgabe

Das Verfahren zum Steuern einer Zweifacheinspritzung entsprechend dem 1. Gesichtspunkt der vorliegenden Erfindung zur Erreichung der o.g. Ziele ist dadurch gekennzeichnet, dass es folgende Phasen umfasst:
eine Phase, in welcher die Einspritzsteuerung beurteilt, ob in einem durch mehr als 1 Kraftstoff - zur Auswahl stehen Kraftstoff 1 und Kraftstoff 2 - betriebenen Motor die zuvor festgelegten Durchführungsbedingungen der Kraftstoffumschaltlogik erfüllt sind, um die Kraftstoffumschaltung auf Antrieb durch den o.g. Kraftstoff 1 oder auf Antrieb durch den o.g. Kraftstoff 2 zu schalten;
eine Phase, in der - wenn o.g. Durchführungsbedingungen erfüllt sind - durch Ausführen der o.g. Kraftstoffumschaltlogik die Kraftstoffmenge, mit der Zylinder 1 des o.g. Motors beliefert wird, bei jedem Kreisprozess nach einem Muster geliefert wird, sodass der Anteil des von der von der Kraftstoffumschaltung angesprochenen Einspritzdüse eingespritzten Kraftstoffes zunimmt, während der von der von der Kraftstoffumschaltung nicht angesprochenen Einspritzdüse eingespritzte Kraftstoff abnimmt, und in der die übrigen Zylinder des o.g. Motors mit Kraftstoffmengen beliefert werden, indem das o.g. Muster sukzessiv wiederholt wird;
eine Phase, in der der Musterabschnitt eintritt, in dem die nach o.g. Muster an o.g. Zylinder 1 gelieferte Gesamtkraftstoffmenge von der von o.g. Kraftstoffumschaltung angesprochenen Einspritzdüse eingespritzt wird, und die die Kraftstoffumschaltung abschließt, wenn o.g. Musterabschnitt sukzessive bei allen o.g. übrigen Zylindern 1 Mal durchlaufen worden ist. Bevorzugterweise dadurch gekennzeichnet, dass o.g. Anteil für jeden o.g. Kreisprozess vorab einzustellen ist. Bevorzugterweise dadurch gekennzeichnet, dass o.g. Durchführungsbedingungen die Fälle umfassen, in denen von Seiten des Benutzers ein Befehl zur Kraftstoffumschaltung vorliegt oder in denen einer der beiden Kraftstoffe - entweder o.g. Kraftstoff 1 oder o.g. Kraftstoff 2 - unterhalb eines zuvor eingestellten Levels liegt und somit nicht ausreichend vorhanden ist.

Des Weiteren ist das Verfahren zum Steuern einer Zweifacheinspritzung entsprechend dem 2. Gesichtspunkt der vorliegenden Erfindung zur Erreichung der o.g. Ziele dadurch gekennzeichnet, dass es folgende Bauteile umfasst:
ein Bauteil, welches beurteilt, ob in einem durch mehr als 1 Kraftstoff - zur Auswahl stehen Kraftstoff 1 und Kraftstoff 2 - betriebenen Motor die zuvor festgelegten Durchführungsbedingungen der Kraftstoffumschaltlogik erfüllt sind, um die Kraftstoffumschaltung auf Antrieb durch den o.g. Kraftstoff 1 oder auf Antrieb durch den o.g. Kraftstoff 2 zu schalten;
eine Einspritzsteuereinheit 1, in der - wenn o.g. Durchführungsbedingungen erfüllt sind - durch Ausführen der o.g. Kraftstoffumschaltlogik die Kraftstoffmenge, mit der Zylinder 1 des o.g. Motors beliefert wird, bei jedem Kreisprozess nach einem Muster geliefert wird, sodass der Anteil des von der von der Kraftstoffumschaltung angesprochenen Einspritzdüse eingespritzten Kraftstoffes zunimmt, während der von der von der Kraftstoffumschaltung nicht angesprochenen Einspritzdüse eingespritzte Kraftstoff abnimmt, und in der die übrigen Zylinder des o.g. Motors mit Kraftstoffmengen beliefert werden, indem das o.g. Muster sukzessiv wiederholt wird;
eine Einspritzsteuereinheit 2, in der der Musterabschnitt eintritt, in dem die nach o.g. Muster an o.g. Zylinder 1 gelieferte Gesamtkraftstoffmenge von der von o.g. Kraftstoffumschaltung angesprochenen Einspritzdüse eingespritzt wird, und die die Kraftstoffumschaltung abschließt, wenn o.g. Musterabschnitt sukzessive bei allen o.g. übrigen Zylindern 1 Mal durchlaufen worden ist.

Bevorzugterweise dadurch gekennzeichnet, dass das Verhalten für o.g. Anteil für jeden o.g. Kreisprozess vorab einzustellen ist. Bevorzugterweise dadurch gekennzeichnet, dass o.g. Durchführungsbedingungen die Fälle umfassen, in denen von Seiten des Benutzers ein Befehl zur Kraftstoffumschaltung vorliegt oder in denen einer der beiden Kraftstoffe - entweder o.g. Kraftstoff 1 oder o.g. Kraftstoff 2 - unterhalb eines zuvor eingestellten Levels liegt und somit nicht ausreichend vorhanden ist.

### Wirkung der Erfindung

Folglich liegen die Vorteile der vorliegenden Erfindung darin, dass die Kraftstoffumschaltung von Benzin auf Flüssiggas (LPG) bzw. von Flüssiggas (LPG) auf Benzin automatisch durchgeführt wird und dass die Umschalteffizienz der Kraftstoffumschaltung gesteigert werden kann, wodurch die Verschwendung von Kraftstoff und das Abschalten des Motors verhindert werden kann.

### Einfache Beschreibung zu den Abbildungen

Die folgenden der vorliegenden Beschreibung beigefügten Abbildungen führen bevorzugte Ausführungsbeispiele für vorliegende Erfindung an und verdeutlichen zusammen mit der später folgenden ausführlichen Beschreibung der Erfindung die technische Idee der vorliegenden Erfindung; die vorliegende Erfindung ist dabei nicht auf die Darstellungsbeispiele in den Abbildungen beschränkt.
Abbildung 1 ist ein Aufbauschema, welches die Anordnung der Einspritzsteuerung gemäß der vorliegenden Erfindung als ein Ausführungsbeispiel darstellt;
Abbildung 2 stellt das Durchführungsergebnis der Kraftstoffumschaltlogik gemäß der vorliegenden Erfindung als ein Ausführungsbeispiel dar;
Abbildung 3 stellt für den Fall einer Kraftstoffumschaltung von Flüssiggas (LPG) auf Benzin das Durchführungsergebnis der Kraftstoffumschaltlogik gemäß der vorliegenden Erfindung als ein Ausführungsbeispiel dar;
Abbildung 4 stellt für den Fall einer Kraftstoffumschaltung von Benzin auf Flüssiggas (LPG) das Durchführungsergebnis der Kraftstoffumschaltlogik gemäß der vorliegenden Erfindung als ein Ausführungsbeispiel dar;
Abbildung 5 ist ein Ablaufschema, welches den Betriebsablauf der Einspritzsteuerung gemäß der vorliegenden Erfindung als ein Ausführungsbeispiel darstellt.

### Bevorzugte Form für die Ausführung der Erfindung

Zum vollständigen Verständnis der vorliegenden Erfindung, der Vorteile hinsichtlich der Arbeitsweise der vorliegenden Erfindung sowie der mit der Ausführung vorliegender Erfindung zu erreichenden Ziele können die beigefügten Abbildungen mit bevorzugten Ausführungsbeispielen sowie die in den Abbildungen dargestellten Inhalte herangezogen werden.

Im Folgenden wird unter Bezugnahme auf die beigefügten Abbildungen ein bevorzugtes Ausführungsbeispiel der Einspritzsteuerung (100) gemäß der vorliegenden Erfindung ausführlich beschrieben.

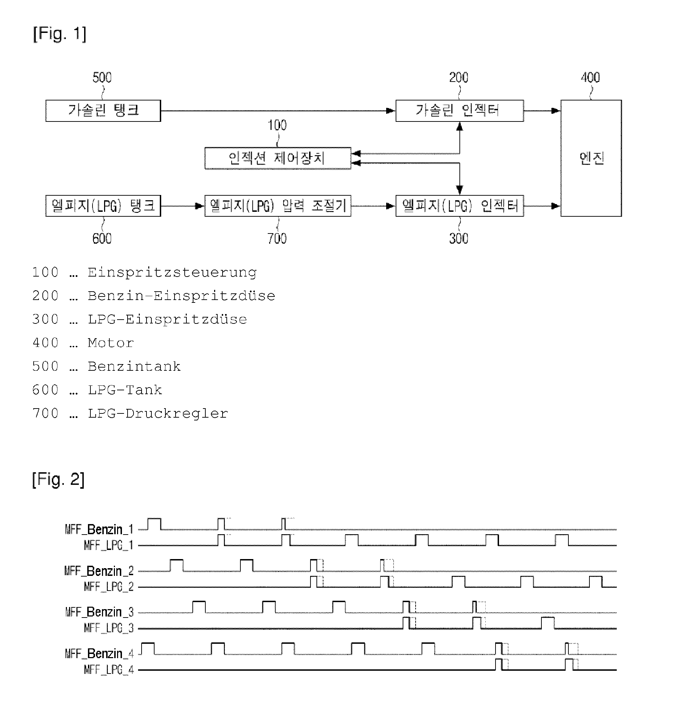

Abbildung 1 ist ein Aufbauschema, welches die Anordnung der Einspritzsteuerung (100) gemäß der vorliegenden Erfindung als ein Ausführungsbeispiel darstellt. Wie in Abbildung 1 lediglich als Beispiel dargestellt, umfasst die Einspritzsteuerung (100) ein Bauteil, welches beurteilt, ob in einem durch mehr als 1 Kraftstoff - zur Auswahl stehen Benzin und Flüssiggas (LPG) - betriebenen Motor (400) die zuvor festgelegten Durchführungsbedingungen der Kraftstoffumschaltlogik erfüllt sind, um die Kraftstoffumschaltung auf Antrieb durch Benzin oder auf Antrieb durch Flüssiggas (LPG) zu schalten;
eine Einspritzsteuereinheit 1, durch die - für den Fall, dass das Ergebnis aus dem Beurteilungs-Bauteil die Durchführungsbedingungen erfüllt - durch Ausführen der Kraftstoffumschaltlogik die Kraftstoffmenge, mit der Zylinder 1 des Motors (400) beliefert wird, bei jedem Kreisprozess nach einem Muster geliefert wird, sodass der Anteil des von der von der Kraftstoffumschaltung angesprochenen Einspritzdüse eingespritzten Kraftstoffes zunimmt, während der von der von der Kraftstoffumschaltung nicht angesprochenen Einspritzdüse eingespritzte Kraftstoff abnimmt, und durch die die übrigen Zylinder mit Kraftstoffmengen beliefert werden, indem das o.g. Muster sukzessiv wiederholt wird;
eine Einspritzsteuereinheit 2, durch die - nachdem der Musterabschnitt eingetreten ist, in dem die nach o.g. Muster an Zylinder 1 gelieferte Gesamtkraftstoffmenge von der von der Kraftstoffumschaltung angesprochenen Einspritzdüse eingespritzt worden ist - die Kraftstoffumschaltung abgeschlossen wird, wenn der eingetretene Musterabschnitt sukzessive auch bei allen übrigen Zylindern 1 Mal durchlaufen worden ist.

Dabei können als Beispiele, sozusagen als Durchführungsbedingungen für die Umschaltlogik, folgende Möglichkeiten angeführt werden: der Fall, dass der Benutzer den Durchführungsbefehl zur Umschaltung des Kraftstoffs von Flüssiggas (LPG) auf Benzin bzw. von Benzin auf Flüssiggas (LPG) gegeben hat, oder der Fall, dass das Flüssiggas (LPG) oder das Benzin unterhalb des zuvor festgelegten Levels liegt und somit nicht ausreichend Kraftstoff vorhanden ist.

Wenn diese Bedingungen erfüllt sind, kann die Einspritzsteuerung (100) durch den automatischen Betrieb die den Motor (400) versorgende Kraftstoffsteuerung effizienter gestalten. Darüber hinaus geschieht die Anpassung an den von der Kraftstoffumschaltlogik genannten Anteil mit jedem Kreisprozess des Motors (400) und wird zuvor festgelegt, nachfolgend eine ausführliche Beschreibung dazu.

Die von der Kraftstoffumschaltung angesprochene Einspritzdüse kann sowohl die Benzin-Einspritzdüse (200) als auch die Flüssiggas(LPG)-Einspritzdüse (300) sein, und auch die von der Kraftstoffumschaltung nicht angesprochene Einspritzdüse kann sowohl die Benzin-Einspritzdüse (200) als auch die Flüssiggas(LPG)-Einspritzdüse (300) sein.

Abbildung 2 stellt das Durchführungsergebnis der Kraftstoffumschaltlogik gemäß der vorliegenden Erfindung als ein Ausführungsbeispiel dar. Wie in Abbildung 2 gezeigt, wird als Beispiel ein mit 4 Zylindern ausgestatteter Motor (400) verwendet.

Beschreibt man beispielsweise ausschließlich den Ablauf für eine Kraftstoffumschaltung von Benzin auf Flüssiggas (LPG), so wird - wenn die Durchführungsbedingungen zur Durchführung der Kraftstoffumschaltlogik erfüllt sind - durch die Durchführung der Kraftstoffumschaltung durch die Einspritzdüsensteuerung (100) verursacht, dass die gesamte in Kreisprozess 1 an Zylinder 1 des Motors (400) gelieferte Kraftstoffmenge zur Hälfte aus Benzin und zur Hälfte aus Flüssiggas (LPG) besteht.

Zudem wird, mit Ausnahme von Zylinder 1, für Zylinder 2 bis Zylinder 4 die Kraftstoffeinspritzung wie vor der Umschaltung beibehalten.

Anschließend wird in Kreisprozess 2 in Zylinder 1 zu 1/4 Benzin und zu 3/4 Flüssiggas (LPG) eingespritzt und in Zylinder 2 wird zur Hälfte Benzin und zur Hälfte Flüssiggas (LPG) eingespritzt. Und mit Ausnahme von Zylinder 1 und Zylinder 2 wird in Zylinder 3 und Zylinder 4 die Kraftstoffeinspritzung wie vor der Umschaltung beibehalten.

Anschließend wird in Kreisprozess 3 in Zylinder 1 nur Flüssiggas (LPG) eingespritzt, in Zylinder 2 wird zu 1/4 Benzin und zu 3/4 Flüssiggas (LPG) eingespritzt und in Zylinder 3 wird zur Hälfte Benzin und zur Hälfte Flüssiggas (LPG) eingespritzt.

Zudem wird in Zylinder 4 die Kraftstoffeinspritzung wie vor der Umschaltung beibehalten.

Anschließend wird in Kreisprozess 4 in Zylinder 1 und Zylinder 2 nur Flüssiggas (LPG) eingespritzt, in Zylinder 3 wird zu 1/4 Benzin und zu 3/4 Flüssiggas (LPG) eingespritzt und in Zylinder 4 wird zur Hälfte Benzin und zur Hälfte Flüssiggas (LPG) eingespritzt.

Anschließend wird in Kreisprozess 5 in Zylinder 1, Zylinder 2 und Zylinder 3 nur Flüssiggas (LPG) eingespritzt und in Zylinder 4 wird zu 1/4 Benzin und zu 3/4 Flüssiggas (LPG) eingespritzt. Zum Schluss wird in Kreisprozess 6 in Zylinder 1, Zylinder 2, Zylinder 3 und Zylinder 4 nur Flüssiggas (LPG) eingespritzt, und damit ist die Kraftstoffumschaltung abgeschlossen.

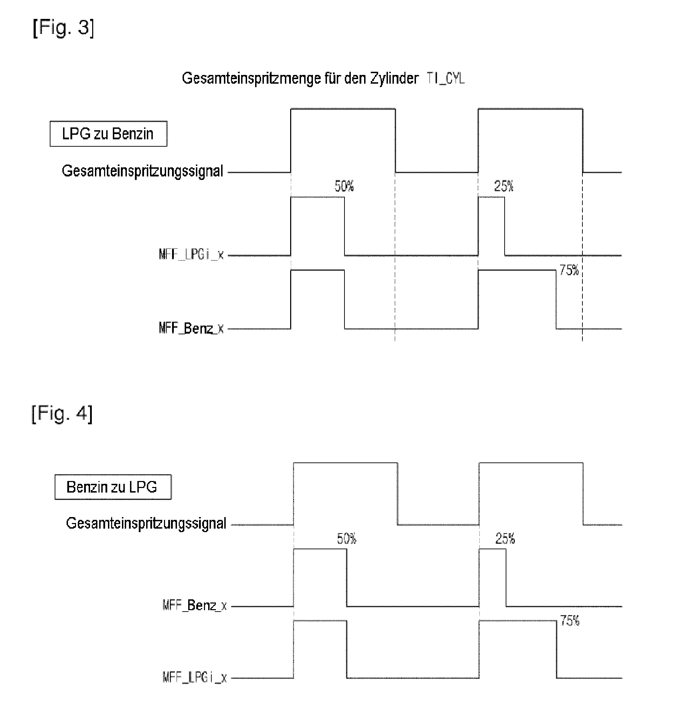

Abbildung 3 stellt für den Fall einer Kraftstoffumschaltung von Flüssiggas (LPG) auf Benzin das Durchführungsergebnis der Kraftstoffumschaltlogik gemäß der vorliegenden Erfindung als ein Ausführungsbeispiel dar. Wie in Abbildung 3 lediglich als Beispiel dargestellt, kann im Motor (400) für den Fall einer Kraftstoffumschaltung von Flüssiggas (LPG) auf Benzin mühelos die Kraftstoffumschaltung durchgeführt werden, indem die Anteile schrittweise derart angepasst werden, dass, nachdem in Kreisprozess 1 die gesamte Kraftstoffmenge zur Versorgung des betreffenden Zylinders zur Hälfte in Benzin und zur Hälfte in Flüssiggas (LPG) geliefert wurde, im anschließend eintretenden Kreisprozess 2 die gesamte Kraftstoffmenge zur Versorgung des betreffenden Zylinders zu 1/4 in Flüssiggas (LPG) und zu 3/4 in Benzin geliefert wird.

Zudem sind die Anteile, welche von der Kraftstoffumschaltlogik reguliert werden, keine festen, aus vorliegender Erfindung resultierenden Werte, sondern mögliche Anteile, welche auf maximale Effizienz erzielenden Testwerten beruhen bzw. welche als geeignete Werte einzustellen sind.

Abbildung 4 stellt für den Fall einer Kraftstoffumschaltung von Benzin auf Flüssiggas (LPG) das Durchführungsergebnis der Kraftstoffumschaltlogik gemäß der vorliegenden Erfindung als ein Ausführungsbeispiel dar. Wie in Abbildung 4 lediglich als Beispiel dargestellt, kann im Motor (400), im Fall der Kraftstoffumschaltung von Benzin auf Flüssiggas (LPG), mühelos die Kraftstoffumschaltung durchgeführt werden, indem die Anteile schrittweise derart angepasst werden, dass, nachdem in Kreisprozess 1 die gesamte Kraftstoffmenge zur Versorgung des betreffenden Zylinders zur Hälfte in Benzin und zur Hälfte in Flüssiggas (LPG) geliefert wurde, im anschließend eintretenden Kreisprozess 2 die gesamte Kraftstoffmenge zur Versorgung des betreffenden Zylinders zu 1/4 in Benzin und zu 3/4 in Flüssiggas (LPG) geliefert wird.

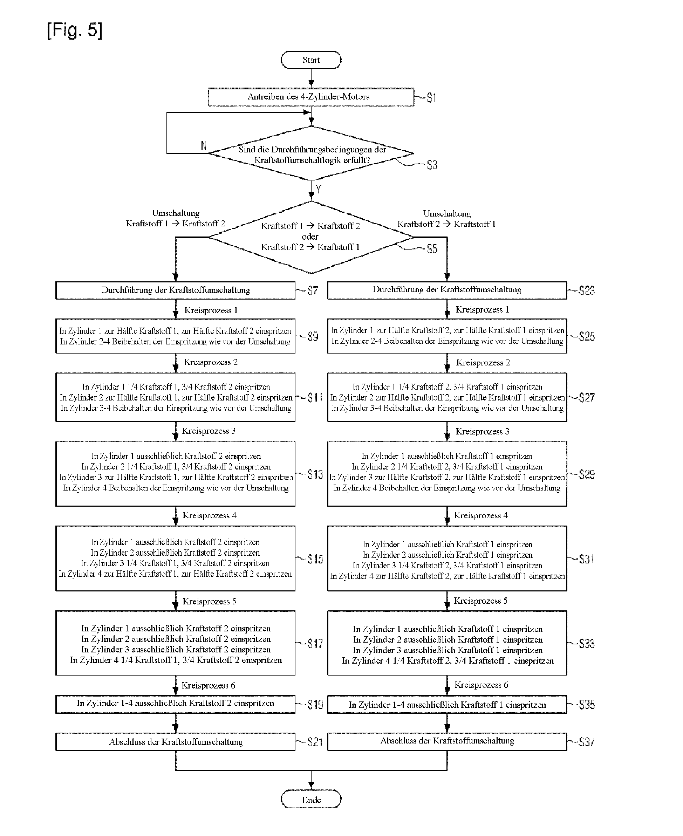

Abbildung 5 ist ein Ablaufschema, welches den Betriebsablauf der Einspritzsteuerung (100) gemäß der vorliegenden Erfindung als ein Ausführungsbeispiel darstellt. Wie in Abbildung 5 lediglich als Beispiel dargestellt, wird das Verfahren zur Einspritzsteuerung durchgeführt (S1 und S3) für den Fall, dass bei laufendem 4-Zylinder-Motor (400) und in Betrieb befindlichem Fahrzeug die Durchführungsbedingungen der Kraftstoffumschaltlogik erfüllt sind.

Wenn die Durchführungsbedingungen der Kraftstoffumschaltlogik zur Umschaltung des Kraftstoffs von Benzin auf Flüssiggas (LPG) erfüllt sind (S5), wird die entsprechende Kraftstoffumschaltung durchgeführt, wobei die gesamte Kraftstoffmenge, mit welcher in Kreisprozess 1 des Motors (400) Zylinder 1 des Motors (400) beliefert wird, zur Hälfte aus Benzin und zur Hälfte aus Flüssiggas (LPG) besteht (S7 und S9).

Zudem wird, mit Ausnahme von Zylinder 1, in Zylinder 2 bis Zylinder 4 die Kraftstoffeinspritzung wie vor der Umschaltung beibehalten.

Anschließend wird in Kreisprozess 2 in Zylinder 1 zu 1/4 Benzin und zu 3/4 Flüssiggas (LPG) eingespritzt und in Zylinder 2 wird zur Hälfte Benzin und zur Hälfte Flüssiggas (LPG) eingespritzt (S11).

Mit Ausnahme von Zylinder 1 und Zylinder 2 wird in Zylinder 3 und Zylinder 4 die Kraftstoffeinspritzung wie vor der Umschaltung beibehalten.

Anschließend wird in Kreisprozess 3 in Zylinder 1 nur Flüssiggas (LPG) eingespritzt, in Zylinder 2 wird zu 1/4 Benzin und zu 3/4 Flüssiggas (LPG) eingespritzt und in Zylinder 3 wird zur Hälfte Benzin und zur Hälfte Flüssiggas (LPG) eingespritzt (S13). Zudem wird in Zylinder 4 die Kraftstoffeinspritzung wie vor der Umschaltung beibehalten.

Anschließend wird in Kreisprozess 4 in Zylinder 1 und Zylinder 2 nur Flüssiggas (LPG) eingespritzt, in Zylinder 3 wird zu 1/4 Benzin und zu 3/4 Flüssiggas (LPG) eingespritzt und in Zylinder 4 wird zur Hälfte Benzin und zur Hälfte Flüssiggas (LPG) eingespritzt (S15).

Anschließend wird in Kreisprozess 5 in Zylinder 1, Zylinder 2 und Zylinder 3 nur Flüssiggas (LPG) eingespritzt und in Zylinder 4 wird zu 1/4 Benzin und zu 3/4 Flüssiggas (LPG) eingespritzt (S17). Zum Schluss wird in Kreisprozess 6 in Zylinder 1, Zylinder 2, Zylinder 3 und Zylinder 4 nur Flüssiggas (LPG) eingespritzt, und damit ist die Kraftstoffumschaltung abgeschlossen (S19 und S21). Ebenso wird, wenn die Durchführungsbedingungen der Kraftstoffumschaltlogik zur Umschaltung des Kraftstoffs von Flüssiggas (LPG) auf Benzin erfüllt sind (S5), die entsprechende Kraftstoffumschaltung durchgeführt, wobei die gesamte Kraftstoffmenge, mit welcher in Kreisprozess 1 des Motors (400) Zylinder 1 des Motors (400) beliefert wird, zur Hälfte aus Benzin und zur Hälfte aus Flüssiggas (LPG) besteht (S23 und S25). Zudem wird, mit Ausnahme von Zylinder 1, in Zylinder 2 bis Zylinder 4 die Kraftstoffeinspritzung wie vor der Umschaltung beibehalten.

Anschließend wird in Kreisprozess 2 in Zylinder 1 zu 1/4 Flüssiggas (LPG) und zu 3/4 Benzin eingespritzt und in Zylinder 2 wird zur Hälfte Benzin und zur Hälfte Flüssiggas (LPG) eingespritzt (S27).

Mit Ausnahme von Zylinder 1 und Zylinder 2 wird in Zylinder 3 und Zylinder 4 die Kraftstoffeinspritzung wie vor der Umschaltung beibehalten.

Anschließend wird in Kreisprozess 3 in Zylinder 1 nur Benzin eingespritzt, in Zylinder 2 wird zu 1/4 Flüssiggas (LPG) und zu 3/4 Benzin eingespritzt und in Zylinder 3 wird zur Hälfte Benzin und zur Hälfte Flüssiggas (LPG) eingespritzt (S29).

Zudem wird in Zylinder 4 die Kraftstoffeinspritzung wie vor der Umschaltung beibehalten.

Anschließend wird in Kreisprozess 4 in Zylinder 1 und Zylinder 2 nur Benzin eingespritzt, in Zylinder 3 wird zu 1/4 Flüssiggas (LPG) und zu 3/4 Benzin eingespritzt und in Zylinder 4 wird zur Hälfte Benzin und zur Hälfte Flüssiggas (LPG) eingespritzt (S31). Anschließend wird in Kreisprozess 5 in Zylinder 1, Zylinder 2 und Zylinder 3 nur Benzin eingespritzt und in Zylinder 4 wird zu 1/4 Flüssiggas (LPG) und zu 3/4 Benzin eingespritzt (S33).

Zum Schluss wird in Kreisprozess 6 in Zylinder 1, Zylinder 2, Zylinder 3 und Zylinder 4 nur Benzin eingespritzt, und damit ist die Kraftstoffumschaltung abgeschlossen (S35 und S37).

Oben stehende Beschreibungen erfolgen unter Bezug auf bevorzugte Ausführungsbeispiele für vorliegende Erfindung, jedoch ist es so zu verstehen, dass Personen, die im entsprechenden technischen Gebiet bewandert und tätig sind, die vorliegende Erfindung auf verschiedene Weise verändern oder verbessern können und zwar in einem Umfang, der nicht von der in nachfolgenden angeführten Ansprüchen festgehaltenen Idee und Wirkungsbereich der vorliegenden Erfindung abweicht.

### Industrielle Anwendungsmöglichkeiten

Außerdem ist vorliegende Erfindung - dadurch, dass sie die Kraftstoffumschaltung von Benzin auf Flüssiggas (LPG) bzw. von Flüssiggas (LPG) auf Benzin automatisch ausführt und die Umschalteffizienz der Kraftstoffumschaltung steigert - für industrielle Anwendungsmöglichkeiten geeignet, denn sie verfügt nicht nur über Markttauglichkeit und Geschäftspotenzial, sondern kann auch tatsächlich klar und deutlich umgesetzt werden.

## Patentansprüche

1. Ein Verfahren zum Steuern einer Zweifacheinspritzung, **dadurch gekennzeichnet, dass** es folgende Phasen umfasst:
eine Phase, in welcher die Einspritzsteuerung beurteilt, ob in einem durch mehr als 1 Kraftstoff - zur Auswahl stehen Kraftstoff 1 und Kraftstoff 2 - betriebenen Motor die zuvor festgelegten Durchführungsbedingungen der Kraftstoffumschaltlogik erfüllt sind, um die Kraftstoffumschaltung auf Antrieb durch den o.g. Kraftstoff 1 oder auf Antrieb durch den o.g. Kraftstoff 2 zu schalten;
eine Phase, in der - wenn o.g. Durchführungsbedingungen erfüllt sind - durch Ausführen der o.g. Kraftstoffumschaltlogik die Kraftstoffmenge, mit der Zylinder 1 des o.g. Motors beliefert wird, bei jedem Kreisprozess nach einem Muster geliefert wird,
sodass der Anteil des von der von der Kraftstoffumschaltung angesprochenen Einspritzdüse eingespritzten Kraftstoffes zunimmt, während der von der von der Kraftstoffumschaltung nicht angesprochenen Einspritzdüse eingespritzte Kraftstoff abnimmt,
und in der die übrigen Zylinder des o.g. Motors mit Kraftstoffmengen beliefert werden, indem das o.g. Muster sukzessiv wiederholt wird;
eine Phase, in der der Musterabschnitt eintritt, in dem die nach o.g. Muster an o.g. Zylinder 1 gelieferte Gesamtkraftstoffmenge von der von o.g. Kraftstoffumschaltung angesprochenen Einspritzdüse eingespritzt wird, und die die Kraftstoffumschaltung abschließt, wenn o.g. Musterabschnitt sukzessive bei allen o.g. übrigen Zylindern 1 Mal durchlaufen worden ist.

2. Ein Verfahren zum Steuern einer Zweifacheinspritzung gemäß Anspruch 1, **dadurch gekennzeichnet, dass** das Verhalten für o.g. Anteil für jeden o.g. Kreisprozess vorab einzustellen ist.

3. Ein Verfahren zum Steuern einer Zweifacheinspritzung gemäß Anspruch 1 und Anspruch 2, **dadurch gekennzeichnet, dass** o.g. Durchführungsbedingungen die Fälle umfassen, in denen von Seiten des Benutzers ein Befehl zur Kraftstoffumschaltung vorliegt oder in denen einer der beiden Kraftstoffe - entweder o.g. Kraftstoff 1 oder o.g. Kraftstoff 2 - unterhalb eines zuvor eingestellten Levels liegt und somit nicht ausreichend vorhanden ist.

4. Eine Einspritzsteuerung, **dadurch gekennzeichnet, dass** sie folgende Bauteile umfasst:
ein Bauteil, welches beurteilt, ob in einem durch mehr als 1 Kraftstoff - zur Auswahl stehen Kraftstoff 1 und Kraftstoff 2 - betriebenen Motor die zuvor festgelegten Durchführungsbedingungen der Kraftstoffumschaltlogik erfüllt sind, um die Kraftstoffumschaltung auf Antrieb durch den o.g. Kraftstoff 1 oder auf Antrieb durch den o.g. Kraftstoff 2 zu schalten;
eine Einspritzsteuereinheit 1, in der - wenn o.g. Durchführungsbedingungen erfüllt sind - durch Ausführen der o.g. Kraftstoffumschaltlogik die Kraftstoffmenge, mit der Zylinder 1 des o.g. Motors beliefert wird, bei jedem Kreisprozess nach einem Muster geliefert wird, sodass der Anteil des von der von der Kraftstoffumschaltung angesprochenen Einspritzdüse eingespritzten Kraftstoffes zunimmt, während der von der von der Kraftstoffumschaltung nicht angesprochenen Einspritzdüse eingespritzte Kraftstoff abnimmt, und in der die übrigen Zylinder des o.g. Motors mit Kraftstoffmengen beliefert werden, indem das o.g. Muster sukzessiv wiederholt wird;
eine Einspritzsteuereinheit 2, in der der Musterabschnitt eintritt, in dem die nach o.g. Muster an o.g. Zylinder 1 gelieferte Gesamtkraftstoffmenge von der von o.g. Kraftstoffumschaltung angesprochenen Einspritzdüse eingespritzt wird, und die die Kraftstoffumschaltung abschließt, wenn o.g. Musterabschnitt sukzessive bei allen o.g. übrigen Zylindern 1 Mal durchlaufen worden ist.

5. Eine Einspritzsteuerung gemäß Anspruch 4, **dadurch gekennzeichnet, dass** das Verhalten für o.g. Anteil für jeden o.g. Kreisprozess vorab einzustellen ist.

6. Eine Einspritzsteuerung gemäß Anspruch 4 und Anspruch 5, **dadurch gekennzeichnet, dass** o.g. Durchführungsbedingungen die Fälle umfassen, in denen von Seiten des Benutzers ein Befehl zur Kraftstoffumschaltung vorliegt oder in denen einer der beiden Kraftstoffe - entweder o.g. Kraftstoff 1 oder o.g. Kraftstoff 2 - unterhalb eines zuvor eingestellten Levels liegt und somit nicht ausreichend vorhanden ist.
